Europäisches Patentamt

European Patent Office

Office européen des brevets

(11) Publication number: **0 196 798 B1**

# EUROPEAN PATENT SPECIFICATION

(45) Date of publication of patent specification: **22.05.91**    (51) Int. Cl.⁵: **B32B 27/08**

(21) Application number: **86301630.9**

(22) Date of filing: **07.03.86**

(54) **High oxygen barrier thermoplastic composite film and process for making the same.**

(30) Priority: **07.03.85 US 709010**
**15.01.86 US 819445**

(43) Date of publication of application:
**08.10.86 Bulletin 86/41**

(45) Publication of the grant of the patent:
**22.05.91 Bulletin 91/21**

(84) Designated Contracting States:
**DE FR GB IT SE**

(56) References cited:
**EP-A- 0 092 897**
**GB-A- 1 477 193**
**GB-A- 1 591 424**
**US-A- 4 161 562**

(73) Proprietor: **W.R. Grace & Co.-Conn. (a Connecticut corp.)**
**Grace Plaza 1114 Avenue of the Americas**
**New York New York 10036(US)**

(72) Inventor: **Mueller, Walter Berndt**
**Rt. 2, Box 303H**
**Inman, South Carolina 29349(US)**
Inventor: **Schirmer, Henry George**
**156 Edgecombe Road**
**Spartanburg, S.C. 29302(US)**

(74) Representative: **Bentham, Stephen et al**
**J.A. Kemp & Co. 14 South Square Gray's Inn**
**London WC1R 5EU(GB)**

**Description**

This invention relates to thermoplastic film, and more particularly a thermoplastic film which provides a high oxygen barrier. More particularly, this invention relates to a thermoplastic composite film which provides a high oxygen barrier.

It is well known that ethylene vinyl alcohol copolymers (EVOH) may act as an oxygen barrier in multilayer films. It is also known that vinylidene chloride copolymer, commonly known as saran (Trade Mark), may also exhibit oxygen barrier characteristics in a multilayer film. However, the characteristics of these barrier agents are such that their effectiveness as oxygen barriers is affected by the humidity of the environment in which the film is used, ie, the barrier properties of these barrier agents are humidity sensitive.

The article Ethylene Vinyl Alcohol Resins for Gas Barrier Material by T. Iwanami and Y. Hirai, TAPPI Journal, Volume 66, No. 10, pages 85-90, discusses the humidity dependence of ethylene vinyl alcohol in estimating its gas-barrier properties. Ethylene vinyl alcohol has good gas-barrier properties, including oxygen barrier properties in low-humidity conditions, but these properties degrade at high humidity. It is known to coat polyvinyl alcohol with for example saran, and to construct a multilayer film in which a core layer of ethylene vinyl alcohol is sandwiched between layers including for example a saran-coated web and heat-sealant layer.

The present invention provides a thermoplastic composite film in which high oxygen barrier characteristics are obtained over a wide range of humidity conditions.

In accordance with the present invention, there is provided a thermoplastic composite film, comprising:

(a) a first component film comprising an abuse-resistant layer;

(b) a second component film adhered to one surface of the first component film;

(c) a third component film adhered to a surface of the second component film opposite said first component film; and

(d) a fourth component film adhered to a surface of the third component film opposite said second component film and comprising a heat-sealable layer;

wherein one of said second and third component films comprises a vinylidene chloride copolymer, and the other of said second and third component films comprises an ethylene vinyl alcohol copolymer.

A preferred embodiment includes a first film comprising a surface layer of ethylene vinyl acetate copolymer, a core layer of linear low density polyethylene, and a second surface layer of ethylene vinyl acetate copolymer; a second film comprising a surface layer blend of polyethylene and ethylene vinyl acetate copolymer, an interior layer of a blend of polyethylene and ethylene vinyl acetate copolymer, an adhesive layer, a layer of ethylene vinyl alcohol, a second adhesive layer, and a second surface layer of ethylene vinyl acetate copolymer; a third film comprising a skin layer of ethylene vinyl acetate copolymer, an interior layer of linear low density polyethylene, a second interior layer of ethylene vinyl acetate copolymer, a core layer of vinylidene chloride copolymer, a layer of ethylene vinyl acetate copolymer, and a second surface layer of ethylene vinyl acetate copolymer; and a fourth film comprising a first surface layer of ethylene vinyl acetate copolymer, a core layer of linear low density polyethylene, and a second surface layer of ethylene vinyl acetate copolymer.

The method of the invention provides for a process for making a thermoplastic composite film, comprising:

(a) melt forming a first component film including an abuse-resistant layer;

(b) melt forming a second component film including a layer of vinylidene chloride copolymer;

(c) melt forming a third component film including a layer of ethylene vinyl alcohol copolymer, and

(d) melt forming a fourth component film including a heat-sealable layer; and

(e) bonding said first, second, third and fourth component films, for example, by corona bonding.

BRIEF DESCRIPTION OF THE DRAWING

Further details are given below with reference to the drawings wherein:

FIG. 1 is a schematic cross-section of a composite film of the invention;

FIG. 2 is a schematic cross-section of a preferred embodiment of a composite film of the invention.

DESCRIPTION OF THE PREFERRED EMBODIMENTS

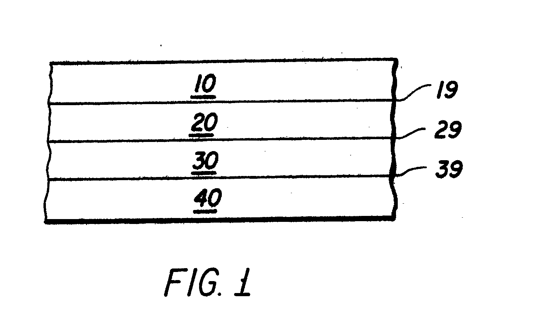

Referring specifically to FIG. 1, a schematic cross-section of the composite film of the invention is shown. The composite film structure is directed to a multi-component composite having the generalized structure A/B/C/D where A and D are surface component films, and B and C are interior barrier component films.

Specifically, first component film 10 forms one of the surface component films of the present composite film. Preferably, the first component film 10 includes abuse resistant materials such as for example polypropylene or its copolymers; nylon and its copolymers; nylon 11 or 12; polyesters; polyurethanes; ethylene vinyl acetate copolymer; and blends of the above. A preferred ethylene vinyl acetate has a vinyl acetate content of about 4.5%.

Second component film 20 forms one of the interior barrier component films of the present composite film. Component film 20 includes a layer of ethylene vinyl alcohol copolymer.

The third component film 30 forms another of the interior barrier component films of the present invention. The third component film 30 includes a layer of vinylidene chloride copolymer or saran.

The fourth component film 40 forms another of the surface component films of the present invention. The fourth component film 40 includes a layer of a heat-sealable material such as for example polyethylene or its copolymers such as ionomer (Surlyn (Trade Mark)), ethylene vinyl acetate copolymer, ethyl methacrylate copolymer, and linear low density polyethylene; polypropylene or its copolymers such as ethylene propylene copolymer and butylene propylene copolymer; polyesters; copolymers of nylon; nylon 11 and 12, and polyurethanes.

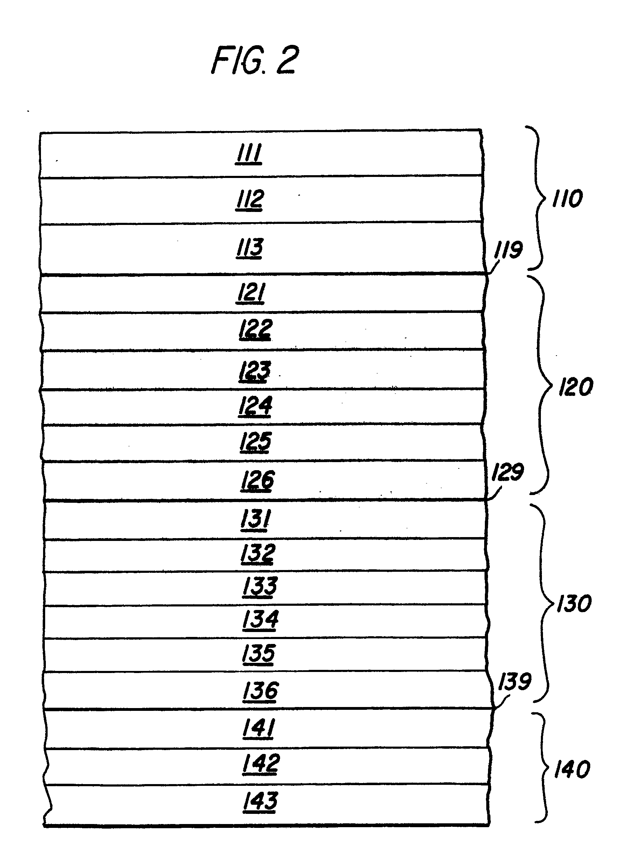

Referring now to FIG. 2, a schematic cross-section of a preferred embodiment of the composite film of the invention is shown. The composite film structure is directed to a multi-component composite having the generalized structure A/B/C/D where A and D are surface components, and B and C are interior barrier component films.

Specifically, first component film 110 forms one of the surface component films of the composite film of the present invention. Component film 110 comprises a first or surface layer 111 of ethylene vinyl acetate copolymer, a core layer 112 of linear low density polyethylene and a second surface layer 113 of ethylene vinyl acetate copolymer.

Second component film 120 forms one of the interior barrier component films of the present composite film. Component film 120 comprises a first or surface layer 121 of a blend of polyethylene and ethylene vinyl acetate copolymer, a second or interior layer 122 of a blend of polyethylene and ethylene vinyl acetate copolmer, a third or interior adhesive layer 123, a fourth or interior layer 124 of ethylene vinyl alcohol copolymer, a fifth or interior adhesive layer 125, and a sixth surface layer 126 of ethylene vinyl acetate copolymer.

The third component film 130 forms another of the interior barrier component films of the present invention. The third component film 130 comprises a first or surface layer 131 of ethylene vinyl acetate copolymer, a second or interior layer 132 of linear low density polyethylene, a third or interior layer 133 of ethylene vinyl acetate copolymer, a fourth or interior layer 134 of vinylidene chloride copolymer, a fifth or interior layer 135 of ethylene vinyl acetate copolymer, and a sixth or surface layer 136 of ethylene vinyl acetate copolymer.

The fourth component film 140 forms another of the surface component films of the present invention. The fourth component film 140 of the present composite film comprises a first or surface layer 141 of ethylene vinyl acetate copolymer, a second or core layer 142 of linear low density polyethylene, and a third or surface layer 143 of ethylene vinyl acetate copolymer.

The component films 110, 120, 130 and 140 of the composite film in accordance with the present invention are preferably of about equal thickness, and more preferably of a thickness of about 0.0254 mm (1 mil) each.

These films may be joined together preferably by corona bonding to produce a composite film of preferably about 0.1016 mm (4 mils) thickness. When corona bonding is used to join these component films, ethylene vinyl acetate is preferred in the outermost layers of each component film to effect an adequate bond. Because of cost considerations, ethylene vinyl acetate copolymers of about 3.5% to 4.5% by weight of vinyl acetate are most preferred.

The term "composite" is used herein to describe a film which is made up of individual films which themselves may be produced from the coextrusion of two or more individual layers, or otherwise produced from two or more individual layers of various thermoplastic materials, adhesive layers, etc.

The term "component film" is used herein to describe one or more of films 10, 20, 30, and 40, which serve to make up the composite film after corona bonding or some other bonding process is applied to the component films.

Referring once again to FIG. 2, the ethylene vinyl acetate layers 111 and 113 of component film 110 are preferably ethylene vinyl acetate copolymers with a vinyl acetate content of about 3.5%. A suitable ethylene vinyl acetate copolymer is PE204-CS95 available from El Paso Products Company.

Core layer 112 of component film 110 is preferably a linear low density polyethylene resin, commercially available for example as Dowlex (Trade Mark) 2045, a resin produced by Dow Chemical Company. This representative resin has a density of about .920 grams per cubic centimeter.

First and second layers 121 and 122 respectively of component film 120 are preferably ethylene vinyl acetate copolymer such as Alathon (Trade Mark) F-3445 made by DuPont Company. Alternately, layers 121 and 122 may be the same as the ethylene vinyl acetate copolymers used in layers 111 and 113 of component film 110. The third and fifth layers 123 and 125 respectively, are adhesive layers employing an adhesive such as Plexar (Trade Mark) 158 available from Norchem. The fourth layer 124 of component film 120 is preferably ethylene vinyl alcohol copolymer. A representative example is EVAL (Trade Mark) EC-F101 resin available from EVAL Co. of America.

The first and sixth layers 131 and 136 respectively of component film 130 are preferably ethylene vinyl acetate copolymers with a vinyl acetate content of preferably about 3.5%, such an ethylene vinyl acetate copolymer being available from El Paso Products Company as PE204-CS95 copolymer EVA resin as discussed above. The second layer 132 of component film 130 is preferably linear low density polyethylene with a density of preferably .920 grams per cubic centimeter, such as the Dowlex 2045 resin discussed above. The third layer 133 of component film 130 is preferably ethylene vinyl acetate copolymer. A suitable resin is Elvax (Trade Mark) 3128 ethylene vinyl acetate resin supplied by DuPont Company. The fourth layer 134 of component film 130 is vinylidene chloride copolymer and preferably a low viscosity unplasticized saran such as PV858 available from Solvay. The saran layer 134 may also include minor amounts of a suitable stabilizer, and other additives may be included, such as extrusion aids. The fifth layer 135 and sixth layer 136 of component film 130 are preferably made up of ethylene vinyl acetate copolymers. The fifth layer 135 is ethylene vinyl acetate copolymer, and is available for example from DuPont Company as Elvax 3128 EVA resin. Sixth layer 136 is an ethylene vinyl acetate copolymer with preferably about 3.5% vinyl acetate, as for example PE204-CS95 copolymer EVA resin as discussed above.

First or surface layer 141 of component film 140 is preferably ethylene vinyl acetate copolymer similar to that present in first layer 111 of component film 110 discussed above. The core layer 142 of component film 140 is preferably linear low density polyethylene similar to that present in second layer 112 of component film 110. The third layer 143 of component film 140 is preferably ethylene vinyl acetate copolymer similar to third layer 113 of component film 110.

It has been found that saran or vinylidene chloride copolymer exhibits better barrier characteristics to oxygen transmission when wet than when dry. Generally, the reverse holds true for ethylene vinyl alcohol copolymer i.e. ethylene vinyl alcohol exhibits better barrier characteristics to oxygen when dry than when wet. It has now been discovered that the combination of both of these materials in the composite film of the present invention produces a composite film with remarkably improved oxygen barrier characteristics.

Table I below demonstrates the oxygen transmission rates of each of the component films of the preferred embodiment of the present invention, and the oxygen transmission rates under both dry and wet conditions for the composite film itself. As is demonstrated in the table, the oxygen transmission rates for the composite film under both dry and wet conditions are much superior to the overall (wet/dry) rates for any of the component films A through C. In this example, Component A represents both surface layers A and D, A and D being identical in this case.

## TABLE 1

|  | COMPONENT A | COMPONENT B | COMPONENT C | COMPONENT ABCA |
|---|---|---|---|---|
| Oxygen transmission[1] @ 22.8°C (73°F), 0% RH | too high for equipment | negligible | 16.6 | 1.0 |
| @ 22.8°C (73°F) 100% RH | too high for equipment | 84.1 | 4.8 | .7 |

NOTES: [1]Units of cubic centimeters STP (24 hours, square meter, atmosphere) At 0% RH, ASTM D 3985. At 100% RH, the "sandwich" method discussed in ASTM Journal of Testing and Evaluation, Volume 12, Number 3, May 1984 at pages 149-151. Testing is performed on Ox-Tran Oxygen Permeability Testing Equipment.

The arrangement of the layer of ethylene vinyl alcohol copolymer and the layer of vinylidene chloride copolymer need not be limited to that described and shown in FIG. 2 and component films 120 and 130 respectively. For example, the component film including the ethylene vinyl alcohol and the component film including the vinylidene chloride copolymer may be arranged so that the EVOH-bearing film is represented by reference numeral 130 in FIG. 2 and the saran-bearing film is represented by reference numeral 120 in FIG. 2.

This interchangeability of the EVOH-bearing component film and the saran-bearing component film within the composite film structure, as well as other advantages of the invention, is further demonstrated in Table 2 below. Tomato puree was packaged in two specimens of a pouch constructed in accordance with the preferred embodiment of the present invention. The control, a number 10 can of tomato puree was used. These materials underwent accelerated age storage to determine their effectiveness in maintaining the color of the tomato product. Since ascorbic acid content is degraded by oxygen, this is a good method of determining the oxygen barrier characteristics of the material in question. The rate of ascorbic acid oxidation is heavily influenced by the dissolved oxygen present. Table 2 represents the monitoring of ascorbic acid content during storage and accelerated aging of the tomato product in the packaging material. "Accelerated aging" is used herein to mean the aging of a material at elevated temperature and/or relative humidity to simulate long-term aging under typical storage conditions. Eight weeks of accelerated aging equates approximately to one year of storage. The first pouch, labeled "saran in-A" had the saran layer between the EVOH layer and the product. This would replicate the structure shown for example in the preferred embodiment and in FIG. 2. Two specimens A and B were used. The second pouch represented by "saran out" had the EVOH layer between the saran layer and the product. Two specimens A and B were used. As a control, a number 10 can of tomato puree was tested, including two specimens A and B. The results are as indicated in Table 2. The AOAC (Association of Official Analytical Chemists) method for ascorbic acid determination by 2,6-Dichloroindophenol titration was used. Surprisingly, it did not appear that the relative positions of the saran-bearing component film and the EVAL-bearing component film with respect to the product was a significant factor in the oxygen barrier behavior of the composite film as a whole.

TABLE 2

| Sample I.D. | °C (°F) Storage % RH Initial | | | Ascorbic Acid Content mg/100 gms. Accelerated Aged | | | |
|---|---|---|---|---|---|---|---|
| | | | | Two Weeks | Four Weeks | Six Weeks | Eight Weeks |
| Saran In-A | 37.8 | (100)/80 | 14.7 | 11.0 | 7.6 | 7.8 | 8.3 |
| Saran In-B | 37.8 | (100)/80 | 14.5 | 11.3 | 8.2 | 8.2 | 8.2 |
| Saran Out-A | 37.8 | (100)/80 | 14.2 | 11.3 | 9.9 | 8.7 | 7.6 |
| Saran Out-B | 37.8 | (100)/80 | 14.5 | 11.6 | 10.0 | 8.9 | 8.0 |
| #10 Can-A | 37.8 | (100)/80 | 14.3 | 8.7 | 11.2 | 9.8 | 9.4 |
| #10 Can-B | 37.8 | (100)/80 | 14.3 | 9.0 | 11.3 | 9.8 | 9.1 |
| Saran In-A | 37.8 | (100)/40 | 14.7 | 11.1 | 11.8 | 8.7 | 8.2 |
| Saran In-B | 37.8 | (100)/40 | 14.5 | 11.3 | 11.9 | 9.1 | 8.0 |
| Saran Out-A | 37.8 | (100)/40 | 14.2 | 11.2 | 12.2 | 10.3 | 10.1 |
| Saran Out-B | 37.8 | (100)/40 | 14.5 | 11.4 | 12.6 | 10.5 | 10.5 |
| #10 Can-A | 37.8 | (100)/40 | 14.3 | 10.4 | 10.1 | 9.7 | 8.3 |
| #10 Can-B | 37.8 | (100)/40 | 14.3 | 10.0 | 9.9 | 9.7 | 9.3 |

Irradiation of the entire composite film or one or more component films or of one or more layers of a component film, may be desired so as to improve the composite film's resistance to abuse and/or puncture and other physical characteristics. It is generally well known in the art that irradiation of certain film materials results in the cross-linking of the polymeric molecular chains contained therein and that such action generally results in a material having improved abuse resistance. When irradiation is employed to accomplish the cross-linking, it may be accomplished by the use of high energy irradiation using electrons, X-rays, gamma rays, beta rays, etc. Preferably, electrons are employed of at least about $10^4$ electron volt energy. The irradiation source can be a Van der Graaff electron accelerator, e.g. one operated, for example, at about 2,000,000 volts with a power output of about 500 watts. Alternatively, there can be employed other sources of high energy electrons such as the General Electric 2,000,000 volt resonant transformer or the corresponding 1,000,000 volt, 4 kilowatt, resonant transformer. The voltage can be adjusted to appropriate levels which may be, for example, 1,000,000 or 2,000,000 or 3,000,000 or 6,000,000 or higher or lower. Other apparatus for irradiating films are known to those of skill in the art. The irradiation is usually carried out at between about one megarad and about 75 megarads, with a preferred range of about 2 megarads to about 12 megarads. Irradiation can be carried out conveniently at room temperature, although higher and lower temperatures, for example, about 0°C to about 60°C may be employed.

Irradiation of vinylidene chloride copolymer can produce excessive chlorine by-products. Therefore, for food applications, irradiation of the vinylidene chloride copolymer layer should be avoided.

The method of the invention provides for a process for making a composite film from four component films comprising coextruding each of component films A through C, and then corona bonding the component films to product the composite film of the present invention. Corona bonding may be accomplished by means well known in the art. Thus, the composite film will exhibit a corona-bonded interface at 19, 29, and 39 (See FIG. 1) or at 119, 129, and 139 (see FIG. 2). Alternatively, the method of the invention provides for a process for making a coextruded thermoplastic film comprising coextruding an abuse resistant material, an interior layer of ethylene vinyl alcohol copolymer, a second interior layer of vinylidene chloride copolymer, and a second surface layer of a heat sealable material.

Composite films made in accordance with the present invention are suitable for example in making hot fill shelf stable food packages, and in particular have a potential use in long-term storage of twelve to eighteen months for products such as catsup and tomato sauce.

**Claims**

1. A thermoplastic, composite film comprising:
   a) A first component film comprising an abuse-resistant layer;
   b) A second component film adhered to one surface of the first component film;
   c) A third component film adhered to a surface of the second component film opposite said first component film; and
   d) A fourth component film adhered to a surface of the third component film opposite said second component film and comprising a heat-sealable layer;
   wherein one of said second and third component films comprises a vinylidene chloride copolymer, and the other of said second and third component films comprises an ethylene vinyl alcohol copolymer.

2. A film according to Claim 1 wherein the said second or third component film is a coextruded film.

3. A film according to Claim 1 or 2 wherein the said first, second, third and fourth component films are bonded together by means of corona bonding.

4. A film according to any of Claims 1 to 3 wherein the first component film forms the outside component of the composite film.

5. A film according to any of Claims 1 to 4 wherein the fourth component film forms the inside of the composite film.

6. A film according to any of Claims 1 to 5, wherein at least one of the component films is irradiated.

7. A composite film comprising:
   a first component film comprising
      a) a first or surface layer of ethylene vinyl acetate copolymer,
      b) a second or core layer of linear low density polyethylene, and
      c) a third or surface layer of ethylene vinyl acetate copolymer;
   a second component film comprising
      a) a first or surface layer of a blend of polyethylene and ethylene vinyl acetate copolymer,
      b) a second or interior layer of a blend of polyethylene and ethylene vinyl acetate copolymer,
      c) a third or interior adhesive layer,
      d) a fourth or interior layer of ethylene vinyl alcohol copolymer.
      e) a fifth or interior adhesive layer, and
      f) a sixth or surface layer of ethylene vinyl acetate copolymer;
   a third component film comprising
      a) a first or surface layer of ethylene vinyl acetate copolymer,
      b) a second or interior layer of linear low density polyethylene,
      c) a third or interior layer of ethylene vinyl acetate copolymer,
      d) a fourth or barrier layer of vinylidene chloride co-polymer,
      e) a fifth or interior layer of ethylene vinyl acetate copolymer, and
      f) a sixth or surface layer of ethylene vinyl acetate copolymer; and
   a fourth component film comprising
      a) a first or surface layer of ethylene vinyl acetate copolymer,
      b) a second or core layer of linear low density polyethylene, and
      c) a third or surface layer of ethylene vinyl acetate copolymer.

8. A composite film according to claim 7 wherein the first and third surface layers of the first component film, the sixth or surface layer of the second component film, the first and sixth surface layers of the third component film, and the first and third surface layers of the fourth component film are ethylene vinyl acetate copolymer wherein the vinyl acetate content is about 3.5%.

9. A process for making a composite film comprising:
   a) melt forming a first component film including an abuse-resistant layer;
   b) melt forming a second component film including a layer of vinylidene chloride copolymer;

c) melt forming a third component film including a layer of ethylene vinyl alcohol copolymer, and

d) melt forming a fourth component film including a heat-sealable layer; and

e) bonding said first, second, third, and fourth component films.

**10.** The process for making a composite film comprising:

a) melt forming a first component film of a first or surface layer of ethylene vinyl acetate copolymer, a second or core layer of linear low density polyethylene, and a third or surface layer of ethylene vinyl acetate copolymer;

b) melt forming a second component film comprising a first or surface layer of a blend of polyethylene and ethylene vinyl acetate copolymer, a second or interior layer of a blend of polyethylene and ethylene vinyl acetate copolymer, a third or adhesive layer, a fourth or interior layer of ethylene vinyl alcohol copolymer, a fifth or interior adhesive layer, and a sixth or surface layer of ethylene vinyl acetate copolymer;

c) melt forming a third component film comprising a first or surface layer of ethylene vinyl acetate copolymer, a second or interior layer of linear low density polyethylene, a third or interior layer of ethylene vinyl acetate copolymer, a fourth or barrier layer of vinylidene chloride copolymer, a fifth or interior layer of ethylene vinyl acetate copolymer, and a sixth or surface layer of ethylene vinyl acetate copolymer;

d) melt forming a fourth component film comprising a first or surface layer of ethylene vinyl acetate copolymer, a second or core layer of linear low density polyethylene, and a third or surface layer of ethylene vinyl acetate copolymer; and

e) bonding said first, second, third, and fourth component films.

**11.** A process according to Claim 9 or 10 wherein the first, second, third and fourth component films are bonded by corona bonding.

**12.** A process according to claim 9, 10 or 11 wherein at least one of the first, second, third, and fourth component films is irradiated.

## Revendications

**1.** Film composite thermoplastique, comprenant :

a) un premier film composant comprenant une couche résistant à la dégradation;

b) un deuxième film composant adhérant à une surface du premier film composant;

c) un troisième film composant adhérant à une surface du deuxième film composant opposée audit premier film composant; et

d) un quatrième film composant adhérant à la surface du troisième film composant opposée audit deuxième film composant et comprenant une couche thermo-scellable;

où l'un desdits deuxième et troisième films composants comprend un copolymère de chlorure de vinylidène, et l'autre desdits deuxième et troisième films composants comprend un copolymère d'éthylène alcool vinylique.

**2.** Film selon la revendication 1, où ledit deuxième ou troisième film composant est un film co-extrudé.

**3.** Film selon la revendication 1 ou 2, où lesdits premier, deuxième, troisième et quatrième films composants sont liés ensemble au moyen d'une liaison corona.

**4.** Film selon l'une quelconque des revendications 1 à 3, où le premier film composant forme le composant extérieur du film composite.

**5.** Film selon l'une quelconque des revendications 1 à 4, où le quatrième film composent forme l'intérieur du film composite.

**6.** Film selon l'une quelconque des revendications 1 à 5, où au moins l'un des films composants est irradié.

**7.** Film composite comprenant :

8

un premier film composant comprenant :

a) une première couche ou couche de surface d'un copolymère d'éthylène acétate de vinyle,

b) une deuxième couche ou couche d'âme d'un polymère linéaire faible densité, et

c) une troisième couche ou couche de surface d'un copolymère d'éthylène acétate de vinyle;

un deuxième film composant comprenant :

a) une première couche ou couche de surface d'un mélange d'un polyéthylène et d'un copolymère d'éthylène acétate de vinyle,

b) une deuxième couche ou couche intérieure d'un mélange de polyéthylène et d'un copolymère d'éthylène acétate de vinyle,

c) une troisième couche ou couche intérieure adhésive,

d) une quatrième couche ou couche intérieure d'un copolymère d'éthylène alcool vinylique,

e) une cinquième couche ou couche intérieure adhésive, et

f) une sixième couche ou couche de surface d'un copolymère d'éthylène acétate de vinyle;

un troisième film composant comprenant :

a) une première couche ou couche de surface d'un copolymère d'éthylène acétate de vinyle,

b) une deuxième couche ou couche intérieure d'un polyéthylène linéaire basse densité,

c) une troisième couche ou couche intérieure d'un copolymère d'éthylène acétate de vinyle,

d) une quatrième couche ou couche formant barrière d'un copolymère de chlorure de vinylidène,

e) une cinquième couche ou couche intérieure d'un copolymère d'éthylène acétate de vinyle, et

f) une sixième couche ou couche de surface d'un copolymère d'éthylène acétate de vinyle; et

un quatrième film composant comprenant :

a) une première couche ou couche de surface d'un copolymère d'éthylène acétate de vinyle,

b) une deuxième couche ou couche d'âme d'un polyéthylène linéaire faible densité, et

c) une troisième couche ou couche de surface d'un copolymère d'éthylène acétate de vinyle.

8. Film composite selon la revendication 7, où les première et troisième couches de surface du premier film composant, la sixième ou couche de surface du deuxième film composant, les première et sixième couches de surface du troisième film composant, et les première et troisième couches de surface du quatrième film composant sont en un copolymère d'éthylène acétate de vinyle où la teneur en acétate de vinyle est d'environ 3,5%.

9. Procédé de fabrication d'un film composite comprenant :

a) la mise en forme en phase fondue d'un premier film composant comprenant une couche résistant à la dégradation ;

b) la mise en forme en phase fondue d'un deuxième film composant comprenant une couche d'un copolymère de chlorure de vinylidène;

c) la mise en forme en phase fondue d'un troisième film composant comprenant une couche d'un copolymère d'ééthylène alcool vinylique, et

d) la mise en forme en phase fondue d'un quatrième film composant comprenant une couche thermo-scellable; et

e) la liaison desdits premier, deuxième, troisième et quatrième films composants.

10. Procédé de fabrication d'un film composite comprenant :

a) la mise en forme en phase fondue d'un premier film composant d'une première couche ou couche de surface d'un copolymère d'éthylène acétate de vinyle, d'une deuxième couche ou couche d'âme d'un polyéthylène linéaire basse densité et d'une troisième couche ou couche de surface d'un copolymère d'éthylène acétate de vinyle;

b) la mise en forme en phase fondue d'un deuxième film composant comprenant une première couche ou couche de surface d'un mélange de polyéthylène et d'un copolymère d'éthylène acétate de vinyle, une deuxième couche ou couche intérieure d'un mélange de polyéthylène et d'un copolymère d'éthylène acétate de vinyle, une troisième couche ou couche adhésive, une quatrième couche ou couche intérieure d'un copolymère d'éthylène alcool vinylique, une cinquième couche ou couche adhésive intérieure et une sixième couche ou couche de surface d'un copolymère d'éthylène acétate de vinyle;

c) la mise en forme en phase fondue d'un troisième film composant comprenant une première couche ou couche de surface d'un copolymère d'éthylène acétate de vinyle, une deuxième couche ou couche intérieure d'un polyéthylène linéaire basse densité, une troisième couche ou couche intérieure d'un copolymère d'éthylène acétate de vinyle, une quatrième couche ou couche formant

9

barrière d'un copolymère de chlorure de vinylidène, une cinquième couche ou couche intérieure d'un copolymère d'éthylène acétate de vinyle et une sixième couche ou couche de surface d'un copolymère d'éthylène acétate de vinyle;

d) la mise en forme en phase fondue d'un quatrième film composant comprenant une première couche ou couche de surface d'un copolymère d'éthylène acétate de vinyle, une deuxième couche ou couche d'âme de polyéthylène linéaire basse densité et une troisième couche ou couche de surface d'un copolymère d'éthylène acétate de vinyle; et

e) la liaison desdits premier, deuxième, troisième et quatrième films composants.

11. Procédé selon la revendication 9 ou 10, où les premier, deuxième, troisième et quatrième films composants sont liés par liaison corona.

12. Procédé selon la revendication 9, 10 ou 11, où au moins l'un des premier, deuxième, troisième et quatrième films composants est irradié.

## Ansprüche

1. Thermoplastische Verbundfolie, die

a) als erste Komponente eine Folie, welche eine abnutzungsbeständige Schicht aufweist,

b) als zweite Komponente eine Folie, welche an einer Oberfläche der ersten Folienkomponente haftet,

c) als dritte Komponente eine Folie, welche an einer Oberfläche der zweiten Folienkomponente haftet, die der ersten Folienkomponente entgegengesetzt ist, und

d) als vierte Komponente eine Folie umfaßt, welche an einer Oberfläche der dritten Folienkomponente haftet, die der zweiten Folienkomponente entgegengesetzt ist, und welche eine wärmesiegelbare Schicht umfaßt,

wobei eine der zweiten und dritten Folienkomponenten ein Vinylidenchlorid-Copolymer und die andere der zweiten und dritten Folienkomponenten ein Ethylenvinylalkohol-Copolymer umfaßt.

2. Folie nach Anspruch 1, bei der die zweite oder dritte Folienkomponente eine koextrudierte Folie ist.

3. Folie nach Anspruch 1 oder 2, bei der die erste, zweite, dritte und vierte Folienkomponente mittels Verbinden durch Koronaentladung miteinander verbunden worden sind.

4. Folie nach einem der Ansprüche 1 bis 3, bei der die erste Folienkomponente die äußere Komponente der Verbundfolie bildet.

5. Folie nach einem der Ansprüche 1 bis 4, bei der die vierte Folienkomponente das Innere der Verbundfolie bildet.

6. Folie nach einem der Ansprüche 1 bis 5, bei der mindestens eine der Folienkomponenten bestrahlt worden ist.

7. Verbundfolie, die

als erste Komponente eine Folie, welche

a) eine erste oder Oberflächenschicht aus Ethylenvinylacetat-Copolymer,

b) eine zweite oder Kernschicht aus linearem Polyethylen niedriger Dichte und

c) eine dritte oder Oberflächenschicht aus Ethylenvinylacetat-Copolymer aufweist,

als zweite Komponente eine Folie, welche

a) eine erste oder Oberflächenschicht aus einer Mischung von Polyethylen und Ethylenvinylacetat-Copolymer,

b) eine zweite oder Innenschicht aus einer Mischung von Polyethylen und Ethylenvinylacetat-Copolymer,

c) eine dritte oder innere Klebeschicht,

d) eine vierte oder Innenschicht aus Ethylenvinylalkohol-Copolymer,

e) eine fünfte oder innere Klebeschicht und

f) eine sechste oder Oberflächenschicht aus Ethylenvinylacetat-Copolymer aufweist,

als dritte Komponente eine Folie, welche
a) eine erste oder Oberflächenschicht aus Ethylenvinylacetat-Copolymer,
b) eine zweite oder Innenschicht aus linearem Polyethylen niedriger Dichte,
c) eine dritte oder Innenschicht aus Ethylenvinylacetat-Copolymer,
d) eine vierte oder Sperrschicht aus Vinylidenchlorid-Copolymer,
e) eine fünfte oder Innenschichte aus Ethylenvinylacetat-Copolymer und
f) eine sechste oder Oberflächenschicht aus Ethylenvinylacetat-Copolymer aufweist und
als vierte Komponente eine Folie umfaßt, welche
a) eine erste oder Oberflächenschicht aus Ethylenvinylacetat-Copolymer,
b) eine zweite oder Kernschicht aus linearem Polyethylen niedriger Dichte und
c) eine dritte oder Oberflächenschicht aus Ethylenvinylacetat-Copolymer aufweist.

8. Verbundfolie nach Anspruch 7, bei der die erste und dritte Oberflächenschicht der ersten Folienkomponente, die sechste oder Oberflächenschicht der zweiten Folienkomponente, die erste und sechste Oberflächenschicht des dritten Folienkomponente und die erste und dritte Oberflächenschicht der vierten Folienkomponente aus Ethylenvinylacetat-Copolymer sind, dessen Vinylacetatgehalt etwa 3,5 % beträgt.

9. Verfahren zur Herstellung einer Verbundfolie, das
a) die Schmelzformung einer ersten Folienkomponente, welche eine abnutzungsbeständige Schicht aufweist,
b) die Schmelzformung einer zweiten Folienkomponente, welche eine Schicht aus Vinylidenchlorid-Copolymer aufweist,
c) die Schmelzformung einer dritten Folienkomponente, welche eine Schicht aus Ethylenvinylalkohol-Copolymer aufweist,
d) die Schmelzformung einer vierten Folienkomponente, welche eine wärmesiegelbare Schicht aufweist, und
e) das Verbinden der ersten, zweiten, dritten und vierten Folienkomponenten umfaßt.

10. Verfahren zur Herstellung einer Verbundfolie, das
a) die Schmelzformung einer ersten Folienkomponente aus einer ersten oder Oberflächenschicht aus Ethylenvinylacetat-Copolymer, einer zweiten oder Kernschicht aus linearem Polyethylen niedriger Dichte und einer dritten oder Oberflächenschicht aus Ethylenvinylacetat-Copolymer,
b) die Schmelzformung einer zweiten Folienkomponente, welche eine erste oder Oberflächenschicht aus einer Mischung von Polyethylen und Ethylenvinylacetat-Copolymer, eine zweite oder Innenschicht aus einer Mischung von Polyethylen und Ethylenvinylacetat-Copolymer, eine dritte oder Klebeschicht, eine vierte oder Innenschicht aus Ethylenvinylalkohol-Copolymer, eine fünfte oder innere Klebeschicht und eine sechste oder Oberflächenschicht aus Ethylenvinylacetat-Copolymer aufweist,
c) die Schmelzformung einer dritten Folienkomponente, welche eine erste oder Oberflächenschicht aus Ethylenvinylacetat-Copolymer, eine zweite oder Innenschicht aus linearem Polyethylen niedriger Dichte, eine dritte oder Innenschicht aus Ethylenvinylacetat-Copolymer, eine vierte oder Sperrschicht aus Vinylidenchlorid-Copolymer, eine fünfte oder Innenschicht aus Ethylenvinylacetat-Copolymer und eine sechste oder Oberflächenschicht aus Ethylenvinylacetat-Copolymer aufweist,
d) die Schmelzformung einer vierten Folienkomponente, welche eine erste oder Oberflächenschicht aus Ethylenvinylacetat-Copolymer, eine zweite oder Kernschicht aus linearem Polyethylen niedriger Dichte und eine dritte oder Oberflächenschicht aus Ethylenvinylacetat-Copolymer aufweist, und
e) das Verbinden der ersten, zweiten, dritten und vierten Folienkomponenten umfaßt.

11. Verfahren nach Anspruch 9 oder 10, bei dem die ersten, zweiten, dritten und vierten Folienkomponenten mittels Verbinden durch Koronaentladung miteinander verbunden werden.

12. Verfahren nach Anspruch 9, 10 oder 11, bei dem mindestens eine der ersten, zweiten, dritten und vierten Folienkomponenten bestrahlt wird.

11

FIG. 1

# FIG. 2

| | |
|---|---|
| *111* | |
| *112* | } *110* |
| *113* | *119* |
| *121* | |
| *122* | |
| *123* | |
| *124* | *120* |
| *125* | |
| *126* | *129* |
| *131* | |
| *132* | |
| *133* | |
| *134* | *130* |
| *135* | |
| *136* | *139* |
| *141* | |
| *142* | *140* |
| *143* | |